# FASCICULE DE BREVET EUROPEEN

(11) **EP 1 346 384 B1**
(45) Date de publication et mention de la délivrance du brevet: **13.12.2006**
(21) Numéro de dépôt: 01982523.1
(22) Date de dépôt: 19.10.2001
(51) Int. Cl.: H01H 13/70, G06F 1/00

(54) **CLAVIER SECURISE**
GESICHERTE TASTATUR
SECURE KEYBOARD

(30) Priorité: 20.10.2000 FR 0013463
(43) Date de publication de la demande: 24.09.2003
(73) Titulaire: ASCOM MONETEL S.A., 07500 Guilherand-Granges (FR)
(72) Inventeur: PAVAGEAU, Stéphane, F-26000 Valence (FR)
(74) Mandataire: de Beaumont, Michel
(86) Numéro de dépôt international: PCT/FR2001/003259
(87) Numéro de publication internationale: WO 2002/033717

(56) Documents cités:
- US-A- 4 644 326
- US-A- 5 872 560
- ANON.: "Security grid arrangement totally enclosing keyboard sensing elements" IBM TECHNICAL DISCLOSURE BULLETIN, vol. 33, no. 9, février 1991 (1991-02), pages 448-449, XP000109569 Armonk, NY, US

## Description

La présente invention concerne la protection contre les intrusions d'appareils électroniques contenant un clavier pour saisir des données confidentielles. Elle est notamment adaptée aux terminaux bancaires, aux téléphones portables, aux ordinateurs, etc.

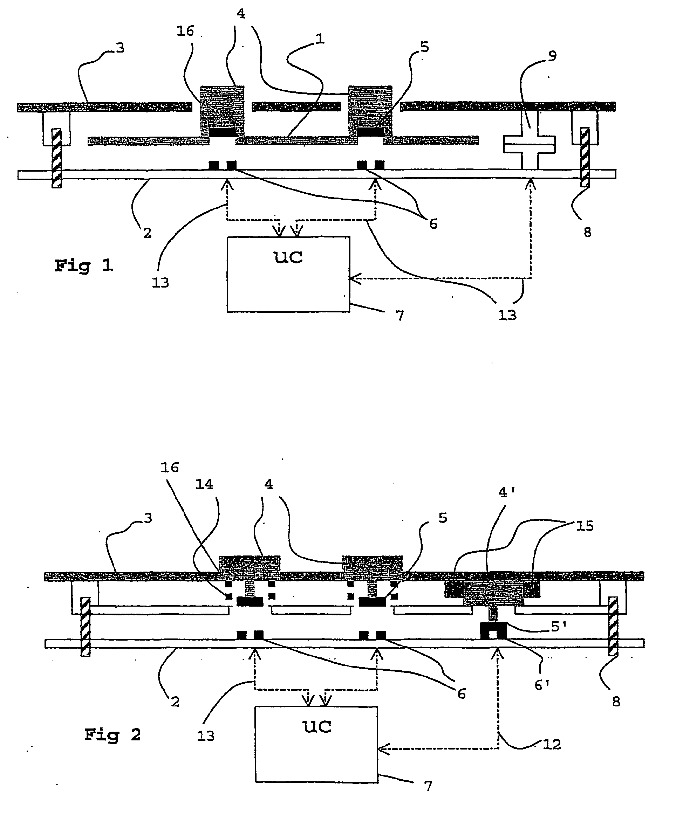

Une solution de l'art antérieur est représentée à la figure 1. La fonction de clavier est réalisée par une membrane en silicone 1 combinée avec une carte électronique 2. Cette membrane 1 est maintenue en compression entre la carte électronique 2 vissée par des vis 8 dans le capot 3 de l'appareil électronique. La membrane contient des cloques élastiques 4 servant de touches de clavier. Chaque touche 4 traverse le capot 3 par une ouverture 16 de ce dernier pour être accessible de l'extérieur. Chaque cloque comporte à sa base une partie conductrice 5 généralement réalisée en silicone chargé de carbone. Les parties conductrices 5 font face à des contacts 6 de type "peigne", placés sur la carte électronique 2 et composés de deux circuits électriques distincts et entrelacés, reliés respectivement à deux bornes distinctes d'un microprocesseur 7. Selon le mode de fonctionnement classique d'un clavier à membrane, une pression sur une touche 4 du clavier amène la partie conductrice 5 correspondante en contact avec le peigne 6 sous-jacent de manière à fermer un circuit électrique 13 sur la carte électronique 2. Cette fermeture est détectée dans le microprocesseur 7. Un type de fraude consiste à placer des circuits électriques supplémentaires entre les parties conductrices 5 et les contacts 6 afin de détecter les touches appuyées et de saisir les données confidentielles aux dépens de l'usager. Pour cela, il est nécessaire d'intervenir entre la carte 2 et le capot 3. Une solution de l'art antérieur pour éviter ce type de fraude consiste à ajouter un commutateur électrique 9 du commerce sur la carte électronique 2, maintenu en compression entre la carte 2 et le capot 3. Le commutateur 9 et les contacts 6 de la carte électronique 2 communiquent avec le microprocesseur 7. Ces communications sont symbolisées par des liaisons 13. Une séparation de la carte 2 du capot 3 est détectée par le commutateur 9 qui informe le microprocesseur de l'intrusion interdite ; des mesures automatiques anti-fraudes sont alors déployées, comme par exemple la mise en veille de l'appareil, l'effacement des données confidentielles, etc.

Un inconvénient de cette solution de l'art antérieur est qu'elle nécessite l'utilisation d'un élément supplémentaire, un commutateur, qui nécessite un montage spécifique par soudure sur la carte électronique 2, puis un placement particulier entre le capot 3 et la carte 2 dépendant des caractéristiques du commutateur. Un tel dispositif est décrit dans le document US-A-4 644 326.

De plus, comme les commutateurs utilisés ne sont pas spécifiques à l'application et que leur utilisation se fait en nombre limité (en général, un par clavier), leur coût de revient est élevé pour un clavier sécurisé.

Un autre inconvénient de l'art antérieur est son manque de flexibilité car, si on veut augmenter le niveau de sécurité, il faut ajouter d'autres commutateurs, ce qui devient vite difficile à réaliser en raison de la complexité du montage.

Un objet de la présente invention est de proposer une solution alternative moins coûteuse, plus facile à réaliser et plus flexible.

Pour atteindre ces objets, la présente invention prévoit un dispositif de sécurité pour clavier, comportant des touches et une carte électronique formant clavier et liées à un capot d'un appareil électronique, au moins une touche dédiée du clavier étant maintenue pressée dans un premier état de fonctionnement normal de l'appareil pour fermer un circuit électrique de détection d'intrusion sur la carte électronique, une ouverture du clavier étant détectée par une ouverture dudit circuit, provoquée par le relâchement de ladite touche dédiée.

Selon un mode de réalisation de la présente invention, ladite touche dédiée porte au moins une partie conductrice en regard d'au moins un contact de la carte électronique fermant, en position normale de fonctionnement, ledit circuit de détection d'intrusion.

Selon un aspect préféré, l'invention prévoit également un dispositif de sécurité pour clavier à membrane, comportant au moins une membrane et une carte électronique formant clavier et liées à un capot d'un appareil électronique, au moins une membrane contenant une partie conductrice en regard d'au moins un contact sur la carte électronique de manière à détecter un déplacement relatif du contact et de la partie conductrice.

Selon un mode de réalisation de la présente invention, la partie conductrice et le contact ferment un circuit électrique en position normale de fonctionnement du clavier, le déplacement relatif étant détecté par une ouverture du circuit électrique.

Selon un mode de réalisation de la présente invention, la membrane contient au moins un picot ayant à sa base la partie conductrice.

Selon un mode de réalisation de la présente invention, la partie conductrice est dorée.

Selon un mode de réalisation de la présente invention, la partie conductrice est destinée à relier électriquement deux contacts de la carte électronique, les contacts étant, de préférence, des contacts de type "peigne".

L'invention concerne également un terminal de paiement possédant un tel dispositif de sécurité.

L'invention concerne également un appareil téléphonique possédant un tel dispositif de sécurité.

L'invention concerne en outre un ordinateur possédant un tel dispositif de sécurité.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente schématiquement un dispositif de sécurité selon l'art antérieur ;
la figure 2 représente un premier mode de réalisation d'un dispositif de sécurité selon la présente invention, appliqué à un clavier de touches à piston ; et
la figure 3 représente un second mode de réalisation préféré de la présente invention, qui s'applique particulièrement à un dispositif de clavier à membrane.

Les mêmes éléments sont désignés par les mêmes références aux différentes figures.

La figure 2 représente un premier mode de réalisation de l'invention. Ce mode de réalisation s'applique, par exemple, à un clavier de type clavier d'ordinateur ou analogue.

Dans ce premier mode de réalisation, un capot 3 d'un appareil présente des ouvertures 16 pour laisser apparaître des touches à piston 4 d'un clavier. Ces touches comportent une partie conductrice 5 à leur base en regard de contacts 6 sur une carte électronique 2. Une pression sur le dessus d'une touche 4 permet de créer une connexion électrique entre la partie conductrice 5 et les contacts 6, ce qui ferme un circuit électrique 13 sur la carte électronique. Un ressort 14 de rappel ramène ensuite la touche 4 dans sa position de repos (relevée) telle que représentée sur la figure 2.

Selon l'invention, au moins une touche 4' est placée sous le capot 3 de l'appareil électronique, c'est-à-dire sans être associée à une ouverture 16. La touche 4' est, par exemple, logée dans une niche 15 ménagée en face interne du capot 3. La touche 4' est maintenue en pression permanente de manière à assurer une connexion électrique entre sa partie conductrice 5' et deux contacts 6' sous-jacents formés sur la carte électronique 2. Les contacts 6' représentent les extrémités d'un circuit électrique 12 de détection d'intrusion passant, par exemple, par un microprocesseur 7 et qui est fermé par la partie 5'. Une séparation de la carte électronique 2 du capot 3 entraînera une ouverture de ce circuit 12, qui sera par exemple détectée par le microprocesseur 7. Selon ce mode de réalisation, on prévoit donc au moins une touche de clavier supplémentaire et on ne prévoit pas d'ouverture en regard dans le capot. On obtient ainsi une touche enfoncée en permanence et qui ne se lève, pour ouvrir le circuit électrique de détection 12, qu'en cas d'intrusion.

Un premier avantage d'une telle réalisation est de simplifier le dispositif de l'art antérieur. Il suffit de prévoir des contacts 6' supplémentaires sur la carte électronique 2 et des touches de clavier correspondantes. La fabrication d'un tel dispositif est beaucoup plus simple. En particulier, on supprime la nécessité de souder un composant spécifique.

Un second avantage est le faible coût du dispositif de sécurité selon l'invention. En effet, l'ajout de quelques touches de clavier et de quelques contacts sur la carte électronique entraîne un surcoût peu important car il s'agit des éléments habituels du clavier.

Le dispositif de sécurité de l'invention qui s'applique à un appareil électronique à clavier consiste à donner à certaines des touches du clavier une fonction de détection d'intrusion alors qu'au contraire, l'art antérieur oriente l'homme du métier vers l'ajout d'un élément spécifique autonome.

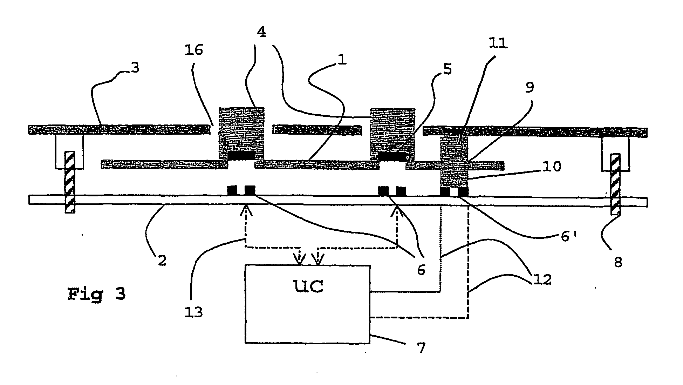

La figure 3 représente un second mode de réalisation préféré de la présente invention, destiné, plus particulièrement, à un clavier à membrane.

Selon ce second mode de réalisation, l'appareil électrique contient un dispositif de clavier à membrane, composé d'une membrane 1 et d'une carte électronique 2, fonctionnant selon le principe de l'art antérieur représenté par la figure 1 et décrit précédemment. Selon l'invention, la membrane 1 contient au moins un picot 11 en silicone, dont la base contient une partie conductrice 10 en connexion électrique permanente avec des contacts 6' en regard sur la carte électronique 2. On pourra choisir des contacts 6' de type "peigne" identiques à ceux 6 utilisés pour la fonction de clavier. Cette connexion électrique permanente crée une boucle électrique fermée 12 sur la carte électronique 2 dont les extrémités sont reliées, par exemple, au microprocesseur 7.

Pour limiter les phénomènes de corrosion qui sont plus importants dans le cas d'une connexion permanente que dans le cas d'une connexion intermittente pour une touche de clavier par exemple, on peut choisir une partie conductrice 10 dorée.

De plus, les dimensions du picot 11 sont fixées de façon à garantir une pression suffisante entre les contacts 6' et. la partie conductrice 10, pour assurer la connexion électrique. Cette pression est aussi avantageusement augmentée pour pouvoir résister à certains chocs comme la chute de l'appareil, sa torsion involontaire, etc. A titre d'exemple, on mesure qu'une pression de l'ordre de 250 g est suffisante pour un appareil de type terminal de paiement classique. Cette valeur peut être réduite dans le cas d'un appareil plus compact et moins sujet aux torsions par exemple. Une séparation de la carte électronique 2 du capot 3 entraînera une diminution de la pression entre les contacts 6' et la partie conductrice 10 jusqu'à une rupture de la connexion électrique, entraînant l'ouverture de la boucle 12. Cette ouverture sera détectée par le microprocesseur 7. Ce nouveau dispositif selon la présente invention remplit donc simplement une fonction de commutateur en profitant de l'élasticité de la membrane 1 et en lui ajoutant avantageusement une partie conductrice 10. Les deux éléments essentiels du dispositif de sécurité selon ce second mode de réalisation de l'invention sont donc d'une part au moins une partie conductrice 10 liée à une membrane 1 et d'autre part la carte électronique 2 possédant au moins un contact 6 en regard, les deux éléments 10 et 6' servant à réaliser un commutateur de sécurité.

Un avantage de ce second mode de réalisation, outre sa simplicité et son faible coût, est qu'il ne nécessite aucun élément supplémentaire, la carte électronique 2 et la membrane 1 suffisant à assurer la fonction de sécurité. En particulier, on économise le recours à un commutateur à ressort d'un clavier sécurisé classique.

On notera que la fonction du picot 11 qui est d'assurer la pression entre les contacts 6' et la partie conductrice 10 après montage des trois éléments que sont le capot, la membrane et la carte électronique, peut être remplie par une protubérance au niveau du capot 3 ou sur la carte 2, la partie conductrice 10 étant toujours liée à la membrane 1.

Selon une autre variante, on pourra utiliser plusieurs membranes, afin par exemple de séparer le dispositif de sécurité et le clavier.

De plus, les contacts 6 et la partie conductrice 10 du dispositif selon l'invention peuvent être de tout type ; il suffit qu'ils assurent une connexion électrique permanente en position normale de fonctionnement de l'appareil. Par exemple, un seul contact 6' et une seule partie conductrice 10 peuvent suffire si le circuit électrique de détection est par ailleurs fermé à demeure, par exemple, par un conducteur filaire reliant le clavier à la carte. On peut également prévoir que le circuit électrique fermé par le dispositif de sécurité de l'invention comprend deux touches ou analogues du clavier. Chaque touche est associée à un seul contact 6' de la carte et les deux parties conductrices 10 en regard sont reliées électriquement, par un circuit à encre conductrice sur la membrane par exemple.

En outre, le dispositif selon la présente invention offre une grande flexibilité puisqu'il est possible de cumuler facilement plusieurs de ces dispositifs de sécurité, qui peuvent être montés en série ou en parallèle entre les mêmes bornes du microprocesseur 7, ou sur différentes bornes. On choisira parmi les multiples combinaisons possibles celle qui correspond au niveau de sécurité recherché. Il est aussi possible de se passer de microprocesseur en utilisant par exemple le dispositif directement comme coupe-circuit de l'alimentation électrique de l'appareil.

Enfin, même si le dispositif de sécurité de l'invention remplace celui de l'art antérieur, on notera qu'il reste compatible avec ce dernier ; cela est un autre avantage de l'invention car il est toujours intéressant, au moins pour des raisons psychologiques, de pouvoir cumuler plusieurs dispositifs différents de protection.

## Revendications

1. Dispositif de sécurité pour clavier, comportant des touches (4) et une carte électronique (2) formant clavier et liées à un capot (3) d'un appareil électronique, **caractérisé en ce que** au moins une touche dédiée (4') du clavier est maintenue pressée dans un premier état de fonctionnement normal de l'appareil pour fermer un circuit électrique (12) de détection d'intrusion sur la carte électronique (2), une ouverture du clavier étant détectée par une ouverture dudit circuit, provoquée par le relâchement de ladite touche dédiée.

2. Dispositif de sécurité pour clavier à membrane, comportant au moins une membrane (1) et une carte électronique (2) formant clavier et liées à un capot (3) d'un appareil électronique, **caractérisé en ce que** au moins une membrane (1) contient une partie conductrice (10) en regard d'au moins un contact (6') sur la carte électronique (2) de manière à détecter un déplacement relatif du contact (6') et de la partie conductrice (10).

3. Dispositif selon la revendication 2, **caractérisé en ce que** la partie conductrice (10) et le contact (6') ferment un circuit électrique (12) en position normale de fonctionnement du clavier, le déplacement relatif étant détecté par une ouverture du circuit électrique (12).

4. Dispositif selon la revendication 2 ou 3, **caractérisé en ce que** la membrane (1) contient au moins un picot (11) ayant à sa base la partie conductrice (10).

5. Dispositif selon la revendication 1, **caractérisé en ce que** ladite touche dédiée (4') porte au moins une partie conductrice (5') en regard d'au moins un contact (6') de la carte électronique (2) fermant, en position normale de fonctionnement, ledit circuit (12) de détection d'intrusion.

6. Dispositif selon l'une quelconque des revendications 2 à 5, **caractérisé en ce que** la partie conductrice (5', 10) est dorée.

7. Dispositif selon l'une quelconque des revendications 2 à 6, **caractérisé en ce que** la partie conductrice (5', 10) est destinée à relier électriquement deux contacts (6') de la carte électronique, les contacts (6') étant, de préférence, des contacts de type "peigne".

8. Terminal de paiement possédant un dispositif de sécurité selon l'une quelconque des revendications précédentes.

9. Appareil téléphonique possédant un dispositif de sécurité selon l'une quelconque des revendications précédentes.

10. Ordinateur possédant un dispositif de sécurité selon l'une quelconque des revendications précédentes.

## Claims

1. A security device for a keyboard, comprising keys (4) and an electronic board (2) forming a keyboard and connected to a lid (3) of an electronic device, **characterized in that** at least one dedicated key (4') of the keyboard is maintained pressed in a first normal operating state of the device to close an electric circuit (12) for detecting an intrusion on the electronic board (2), an opening of the keyboard being detected by an opening of said circuit, caused by the releasing of said dedicated key.

2. A security device for a membrane keyboard, comprising at least one membrane (1) and an electronic board (2) forming a keyboard and connected to a lid (3) of an electronic device, **characterized in that** at least one membrane (1) contains a conductive portion (10) facing at least one contact (6') on the electronic board (2) to detect a relative displacement of the contact (6') and of the conductive portion (10).

3. The device of claim 2, **characterized in that** the conductive portion (10) and the contact (6') close an electric circuit (12) in the normal operating position of the keyboard, the relative displacement being detected by an opening of the electric circuit (12).

4. The device of claim 2 or 3, **characterized in that** the membrane (1) contains at least one pin (11) having at its base the conductive portion (10).

5. The device of claim 1, **characterized in that** said dedicated key (4') supports at least one conductive portion (5') facing at least one contact (6') of the electronic board (2) closing, in normal operating position, said intrusion detection circuit (12).

6. The device of any of claims 2 to 5, **characterized in that** the conductive portion (5', 10) is gilded.

7. The device of any of claims 2 to 6, **characterized in that** the conductive portion (5', 10) is intended to electrically connect two contacts (6') of the electronic board, the contacts (6') being, preferably, "comb"-type contacts.

8. A payment terminal provided with the security device of any of the foregoing claims.

9. A telephone set provided with the security device of any of the foregoing claims.

10. A computer provided with the security device of any of the foregoing claims.

## Patentansprüche

1. Sicherheitsvorrichtung für eine Tastatur, mit Tasten (4) und eine Leiterplatte (2), die die Tastatur bilden und mit einer Haube (3) eines elektronischen Geräts verbunden sind, **dadurch gekennzeichnet, dass** wenigstens eine dezidierte Taste (4') der Tastatur in einem ersten, normalen Funktionszustand des Geräts gedrückt gehalten wird, um einen elektrischen Schaltkreis (12) für die lnstruktionsdetektion auf der Leiterplatte (2) zu schließen, wobei eine Öffnung der Tastatur durch eine Öffnung des besagten Schaltkreises detektiert wird, die durch die Freigabe der besagten dezidierten Taste ausgelöst wird

2. Sicherheitsvorrichtung für eine Membran-Tastatur mit wenigstens einer Membran (1) und einer Leiterplatte (2), die die Tastatur bilden und an einer Haube (3) eines elektrischen Geräts befestigt sind, **dadurch gekennzeichnet, dass** wenigstens eine Membran (1) einen leitenden Bereich (10) bezüglich wenigstens einem Kontakt (6') auf der Leiterplatte (2) aufweist, um einen relativen Versatz des Kontakts (6') und des leitenden Bereichs (10) zu detektieren.

3. Vorrichtung nach Anspruch 2, **dadurch gekennzeichnet, dass** der leitende Bereich (10) und der Kontakt (6') einen elektrischen Schaltkreis (12) in normaler Position der Funktion der Tastatur schließen, wobei der relative Versatz durch eine Öffnung des elektronischen Schaltkreis (12) festgestellt wird

4. Vorrichtung nach Anspruch 2 oder 3, **dadurch gekennzeichnet, dass** die Membran (1) wenigstens eine Nadel (11) aufweist, die an seiner Unterseite den leitenden Bereich (10) besitzt

5. Vorrichtung nach Anspruch 1, **dadurch gekennzeichnet, dass** die besagte dezidierte Taste (4') wenigstens einen leitenden Bereich (5') bezüglich wenigstens einem Kontakt (6') der elektronischen Leiterplatte (2) trägt, die in normaler Funktionsposition den besagten Schaltkreis (12) zur Detektion der Instruktion schließt.

6. Vorrichtung nach einem der Ansprüchen 2 bis 5, **dadurch gekennzeichnet, dass** der leitende Bereich (5', 10) vergoldet ist.

7. Vorrichtung nach einem der Ansprüchen 2 bis 6, **dadurch gekennzeichnet, dass** der leitende Bereich (5', 10) dazu bestimmt ist, zwei Kontakte (6') der Leiterplatte elektrisch zu verbinden, wobei die Kontakte (6') vorzugsweise Kontakte des Typs "Kamm" bzw. "peigne" sind.

8. Zahlungsterminal mit einer Sicherheitsvorrichtung gemäß einem der vorhergehenden Ansprüche.

9. Telefonapparat mit einer Sicherheitsvorrichtung gemäß einem der vorhergehenden Ansprüche

10. Rechner mit einer Sicherheitsvorrichtung gemäß einem der vorhergehenden Ansprüche.
